# DEMANDE DE BREVET EUROPEEN

(11) **EP 4 484 796 A1**
(43) Date de publication de la demande: **01.01.2025**
(21) Numéro de dépôt: 24181703.0
(22) Date de dépôt: 12.06.2024
(51) Int. Cl.: F16H 1/06, B60K 1/00, F16C 35/067, F16C 35/077, F16H 57/021, F16H 57/023

(54) **UNITÉ D ENTRAINEMENT D'UN DISPOSITIF DE MOBILITÉ, EN PARTICULIER D'UN VÉHICULE**

(30) Priorité: 29.06.2023 FR 2306918
(71) Demandeur: VALEO EMBRAYAGES, 80009 Amiens (FR)
(72) Inventeur: VERHOOG, Roël, 95892 Cergy Pontoise (FR); MAUREL, Herve, 95892 Cergy Pontoise (FR); RUMEAU, Eric, 95892 Cergy Pontoise (FR); MAHE, Herve, 95892 Cergy Pontoise (FR)
(74) Mandataire: Valeo Powertrain Systems

(57) **Abrégé**

L'invention concerne une unité d'entraînement (1,100) d'un dispositif de mobilité comprenant
- une machine électrique (2),
- un carter comprenant une première coquille (6) et une deuxième coquille (7), la deuxième coquille étant située entre la machine électrique et la première coquille,
- un arbre principal (4,40) logé dans un espace (8) délimité par la première coquille et la deuxième coquille et étant apte à être mis en rotation par l'intermédiaire de la machine électrique,
- l'arbre principal étant monté sur la deuxième coquille par l'intermédiaire d'un premier roulement (15,30,23),
dans laquelle le premier roulement est monté sans jeu sur la deuxième coquille par l'intermédiaire de premiers moyens de retenu axial (21,211, 212).

## Description

L'invention concerne une unité d'entraînement d'un dispositif de mobilité.

Une unité d'entraînement comprend généralement un moteur électrique, un carter comprenant une première coquille et une deuxième coquille reliées entre elles pour délimiter un espace pouvant renfermer au moins un arbre principal de transmission. La deuxième coquille coopère avec la machine électrique. Par exemple, la deuxième coquille peut servir d'élément de protection entourant la machine électrique. Ou bien la deuxième coquille peut être reliée mécaniquement au stator de la machine électrique. La machine électrique est positionnée sur un premier côté de la deuxième coquille tandis que la première coquille est positionnée sur un deuxième côté de la deuxième coquille.

L'arbre principal est destiné à être mis en rotation par l'intermédiaire de la machine électrique. L'arbre principal est monté sur la deuxième coquille par l'intermédiaire d'un premier roulement.

Lorsque la machine électrique est mise en marche, des vibrations sont générées. Une partie de ces vibrations se répercutent sur la première coquille la faisant vibrer. Ces vibrations sont sources de bruits et risquent également de détériorer les différents éléments se trouvant dans le carter. Par exemple, dans le carter peuvent se trouver également un arbre intermédiaire coopérant par engrenage avec l'arbre principal. Dans le carter peut également se trouver un différentiel apte à coopérer avec l'arbre intermédiaire. Ainsi, lorsque les vibrations sont générées sur la première coquille, ce sont l'arbre principal, l'arbre intermédiaire et le différentiel qui peuvent également être affectés par ces différentes vibrations et qui peuvent nuire à leur bon fonctionnement.

L'invention vise à résoudre ces problèmes et à proposer une unité d'entraînement qui permet de réduire les vibrations sur la première coquille.

Pour ce faire est proposée, selon un aspect de l'invention, une unité d'entraînement d'un dispositif de mobilité, en particulier d'un véhicule, comprenant
- une machine électrique,
- un carter comprenant une première coquille et une deuxième coquille, la deuxième coquille étant positionnée entre la machine électrique et la première coquille,
- un arbre principal logé dans un espace délimité par la première coquille et la deuxième coquille et étant apte à être mis en rotation par l'intermédiaire de la machine électrique,
- l'arbre principal étant monté sur la deuxième coquille par l'intermédiaire d'un premier roulement,
dans laquelle le premier roulement est monté sans jeu sur la deuxième coquille par l'intermédiaire de premiers moyens de retenu axial.

Une telle unité d'entraînement a pour avantage d'éviter de faire vibrer le plus possible la première coquille et de concentrer les vibrations au niveau de la deuxième coquille, proche du moteur électrique.

Le carter peut être un carter de boîte de vitesses.

Le premier roulement est par exemple un roulement à billes.

Suivant un mode de réalisation de l'invention, les premiers moyens de retenu axial sont localisés entre le premier roulement et la deuxième coquille.

Suivant un mode de réalisation de l'invention, les premiers moyens de retenu axial sont formés par un circlips ou une vis.

Suivant un mode de réalisation de l'invention, le premier roulement comporte une bague externe apte à être montée sur la deuxième coquille et une bague interne apte à être montée sur l'arbre principal, la bague externe comporte une première gorge périphérique et la deuxième coquille comporte une deuxième gorge périphérique, la bague externe et la deuxième coquille étant positionnées l'une par rapport à l'autre de telle manière à ce que le circlips est logé à l'intérieur de la première gorge et de la deuxième gorge.

Suivant un mode de réalisation de l'invention, le premier roulement comporte une bague externe apte à être montée sur la deuxième coquille et une bague interne apte à être montée sur l'arbre principal, la deuxième coquille comportant une butée, le circlips étant positionné en appui contre la butée et contre la bague externe. Dans un exemple, le circlips est positionné en appui axialement contre la butée et contre la bague externe.

Suivant un mode de réalisation de l'invention, le premier roulement comporte une bague externe apte à être montée sur la deuxième coquille et une bague interne apte à être montée sur l'arbre principal, la vis étant formée par une tige et par une tête de vis, la tige étant vissée dans la deuxième coquille de telle sorte à ce que la bague externe soit en appui contre la tête de vis. Dans un exemple, une plaque est intercalée axialement entre la tête de vis et la bague externe.

Suivant un mode de réalisation de l'invention, au moins une rondelle élastique est montée entre la deuxième coquille et la bague externe et/ou entre la bague externe et la tête de vis.

Dans un exemple de réalisation de l'invention, plusieurs rondelles élastiques sont montées superposées axialement les unes par rapport aux autres.

Suivant un mode de réalisation de l'invention, la machine électrique comporte un arbre de rotor, l'arbre de rotor présentant une première portion d'extrémité qui est montée autour d'une deuxième portion d'extrémité de l'arbre principal, le premier roulement étant positionné entre la première portion d'extrémité de l'arbre de rotor et la deuxième coquille.

Suivant un mode de réalisation de l'invention, la machine électrique comporte un arbre de rotor, l'arbre principal présentant une troisième portion d'extrémité qui est montée autour d'une quatrième portion d'extrémité de l'arbre de rotor, le premier roulement étant positionné entre la troisième portion d'extrémité de l'arbre principal et la deuxième coquille.

Suivant un mode de réalisation de l'invention, l'unité d'entraînement comporte un deuxième roulement monté sur la première coquille et disposé entre l'arbre principal et la première coquille.

Suivant un mode de réalisation de l'invention, le deuxième roulement est monté avec jeu sur la première coquille. Le montage avec jeu dans la direction axiale sur la première coquille évite la transmission des vibrations au sein de cette première coquille.

Suivant un mode de réalisation de l'invention, le deuxième roulement est à un roulement à rouleaux. Un tel roulement permet de résister à de fortes charges radiales.

Suivant un mode de réalisation de l'invention, l'unité d'entraînement comporte un arbre intermédiaire qui coopère par engrènement avec l'arbre principal, l'arbre intermédiaire étant monté sur la deuxième coquille par l'intermédiaire d'un troisième roulement, le troisième roulement est monté sans jeu sur la deuxième coquille par l'intermédiaire de deuxièmes moyens de retenu axial.

Dans un exemple, le troisième roulement est identique au premier roulement et les deuxièmes moyens de retenu axial sont identiques aux premiers moyens de retenu axial.

Suivant un mode de réalisation de l'invention, l'arbre intermédiaire est monté sur la première coquille par l'intermédiaire d'un cinquième roulement, le cinquième roulement étant un roulement à rouleaux.

Suivant un mode de réalisation de l'invention, le cinquième roulement est monté avec jeu dans la direction axiale sur la première coquille. Le montage avec jeu dans la direction axiale sur la première coquille évite la transmission des vibrations au sein de cette première coquille.

Suivant un mode de réalisation de l'invention, l'arbre intermédiaire est positionné sur un même encombrement radial que celui de la machine électrique.

Suivant un mode de réalisation de l'invention, la machine électrique présente un encombrement sensiblement cylindrique, notamment défini par son diamètre extérieur, l'axe de rotation de l'arbre intermédiaire est inscrit à l'intérieur du diamètre extérieur de la machine électrique.

Avantageusement, la machine électrique peut être en appui axial sur la deuxième coquille, par l'intermédiaire d'une surface d'appui sensiblement circulaire ayant un diamètre extérieur, l'axe de rotation de l'arbre intermédiaire est inscrit à l'intérieur du diamètre extérieur de la surface d'appui. De cette manière, la machine électrique participe à la rigidification de la deuxième coquille. La reprise des efforts axiaux au sein de l'arbre principal et de l'arbre intermédiaire se fait sur une zone rigidifiée de la deuxième coquille.

En variante, la deuxième coquille peut supporter directement la machine électrique par l'intermédiaire d'une couronne d'appui issue de matière avec la deuxième coquille, la machine électrique étant insérée à l'intérieur de cette couronne d'appui. De cette manière, la reprise des efforts axiaux au sein de l'arbre principal et de l'arbre intermédiaire se fait sur une zone rigidifiée de la deuxième coquille.

Suivant un mode de réalisation de l'invention, les premiers moyens de retenu axial et les deuxièmes moyens de retenu axial sont communs et réalisés par une seule et même butée. On facilite ainsi l'assemblage de l'unité d'entraînement.

Suivant un mode de réalisation de l'invention, les premiers moyens de retenu axial et les deuxièmes moyens de retenu axial sont décalés axialement et supportés par une seule et même butée.

De préférence, la butée peut comprendre une plaque commune pourvue de deux orifices agencés pour le passage de l'arbre principal et de l'arbre intermédiaire.

Suivant un mode de réalisation de l'invention, l'unité d'entraînement comporte un différentiel qui coopère par engrènement avec l'arbre intermédiaire, le différentiel étant monté sur la deuxième coquille par l'intermédiaire d'un quatrième roulement, le quatrième roulement étant monté sans jeu sur la deuxième coquille par l'intermédiaire de troisièmes moyens de retenu axial.

Dans un exemple, le quatrième roulement est identique au premier roulement et les troisièmes moyens de retenu axial sont identiques aux premiers moyens de retenu axial.

Suivant un mode de réalisation de l'invention, l'arbre principal et l'arbre intermédiaire coopèrent par engrènement par l'intermédiaire respectivement d'une première denture et d'une deuxième denture. L'arbre intermédiaire et le différentiel coopèrent par engrènement par l'intermédiaire respectivement d'une troisième denture et d'une quatrième denture. La première denture, la deuxième denture, la troisième denture et la quatrième denture peuvent être réalisées de telle manière à ce que lorsque l'arbre principal, l'arbre intermédiaire et le différentiel sont engrenés les uns avec les autres un premier effort axial E1 est généré par l'arbre principal, un deuxième effort axial E2 est généré par l'arbre intermédiaire et un troisième effort axial E3 est généré par le différentiel.

Selon l'invention, quel que soit le sens de rotation de l'arbre principal, les différentes charges axiales résultants des différents efforts axiaux E1, E2 et E3 sont toutes retransmises directement à la deuxième coquille ou indirectement par l'intermédiaire des moyens de retenu axial à la deuxième coquille.

Suivant un mode de réalisation de l'invention, La première denture, la deuxième denture, la troisième denture et la quatrième denture présentent chacune une forme hélicoïdale.

Suivant un mode de réalisation de l'invention, la forme hélicoïdale des dentures est choisi de telle manière à compenser les efforts axiaux respectifs.

D'autres caractéristiques et avantages de l'invention ressortiront à la lecture de la description qui suit, en référence aux figures annexées.
[Fig. 1] La figure 1 illustre une unité d'entraînement d'un véhicule, selon un premier mode de réalisation de l'invention ;
[Fig. 2] La figure 2 illustre un agrandissement d'une zone de montage d'un arbre principal sur un carter de l'unité d'entraînement, selon le premier mode de réalisation de l'invention ;
[Fig. 3] La figure 3 illustre un agrandissement d'une zone de montage d'un arbre principal sur un carter de l'unité d'entraînement, selon un deuxième mode de réalisation de l'invention ;
[Fig. 4] La figure 4 illustre un roulement d'une unité d'entraînement d'un véhicule, selon un troisième mode de réalisation de l'invention ;
[Fig. 5] La figure 5 illustre une unité d'entraînement d'un véhicule, selon un quatrième mode de réalisation de l'invention.
[Fig. 6] La figure 6 illustre une unité d'entraînement d'un véhicule, selon un cinquième mode de réalisation de l'invention.

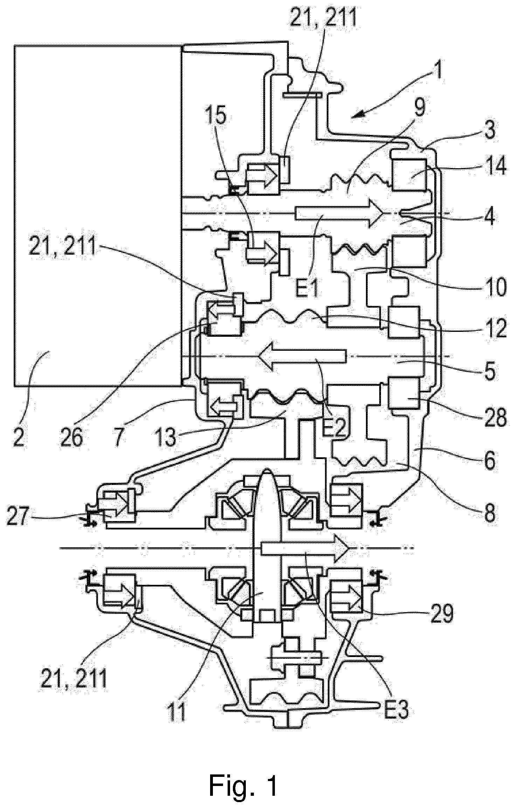

Sur la figure 1 est illustrée une unité d'entraînement 1 d'un véhicule destiné plus particulièrement, bien que de manière non exclusive, à un engin de déplacement personnel motorisé selon un premier mode de réalisation de l'invention. Cette unité d'entraînement 1 comporte une machine électrique 2, un carter 3, un arbre principal 4, un arbre intermédiaire 5 et un différentiel 11. Le différentiel 11 permet de répartir le couple entre deux demi-arbres de sortie (non représentés sur la figure 1). Le carter 3 comporte une première coquille 6 et une deuxième coquille 7. La première coquille 6 et la deuxième coquille 7 sont reliées fixement l'une à l'autre de manière à délimiter un espace 8. La deuxième coquille 7 est reliée à la machine électrique 2 par un premier côté et est reliée à la première coquille 6 par un deuxième côté opposé au premier côté. La deuxième coquille 7 peut être une partie d'un couvercle protecteur de la machine électrique 2.

L'arbre principal 4 est entraîné directement par la machine électrique 2. Dans un exemple non illustré, la machine électrique 2 présente un arbre de rotor avec une première portion d'extrémité qui est montée autour d'une deuxième portion d'extrémité de l'arbre principal 4 (non illustré). Ou bien dans un autre exemple, l'arbre principal 4 présente une troisième portion d'extrémité qui est montée autour d'une quatrième portion d'extrémité de l'arbre de rotor (non illustré).

L'arbre intermédiaire 5 est relié à l'arbre principal 4 par engrènement de l'arbre principal 4 et de l'arbre intermédiaire 5 l'un avec l'autre. Pour cela, l'arbre principal 4 comporte une première denture 9 et l'arbre intermédiaire 5 présente une deuxième denture 10. L'arbre principal 4 et l'arbre intermédiaire 5 coopèrent par engrènement de la première denture 9 et de la deuxième denture 10 l'une avec l'autre.

L'arbre intermédiaire 5 est destiné à coopérer également avec le différentiel 11. Pour cela, l'arbre intermédiaire 5 présente une troisième denture 12 et le différentiel 11 présente une quatrième denture 13. L'arbre intermédiaire 5 et le différentiel 11 coopèrent l'un avec l'autre par engrènement de la troisième denture 12 et de la quatrième denture 13 l'une avec l'autre.

La première denture 9 et la troisième denture 12 sont formées directement sur l'arbre principal 4 et sur l'arbre intermédiaire 5 respectivement. Tandis que la deuxième denture 10 et la quatrième denture 13 sont formées chacune par une roue dentée rapportée.

Selon l'exemple de réalisation figure 1, l'arbre principal 4, l'arbre intermédiaire 5 et le différentiel 11 sont montés sur la deuxième coquille 7 par l'intermédiaire respectivement d'un premier roulement 15, d'un deuxième roulement 26 et d'un troisième roulement 27.

L'arbre principal 4, l'arbre intermédiaire 5 et le différentiel 11 sont également montés sur la première coquille 6 par l'intermédiaire respectivement d'un quatrième roulement 14, d'un cinquième roulement 28 et d'un sixième roulement 29.

Le premier roulement 15 est destiné à être positionné directement au contact de l'arbre principal 4. Cependant, en variante non illustrée comme précédemment mentionné, lorsque l'arbre de rotor est monté sur l'arbre principal 4, le premier roulement 15 est monté indirectement sur l'arbre principal 4 par l'intermédiaire de l'arbre de rotor (non illustré).

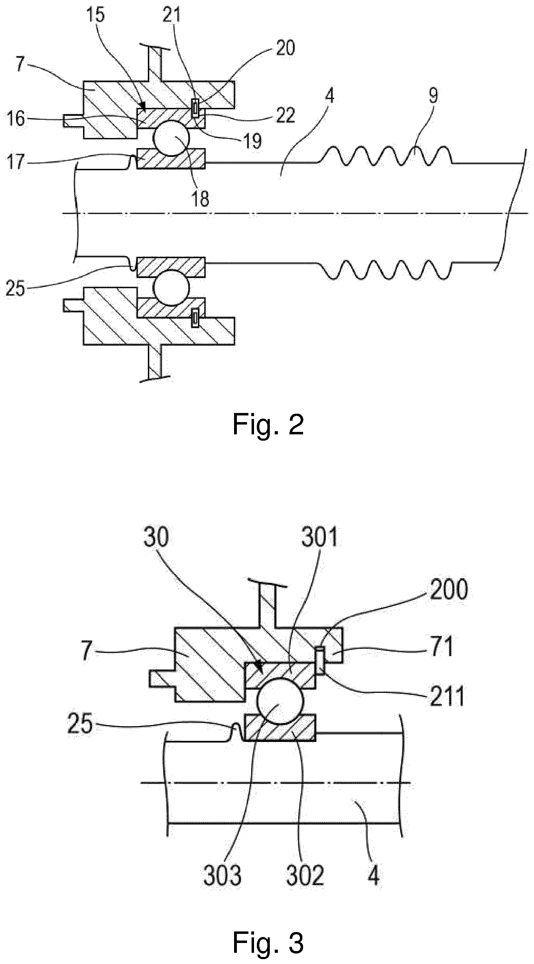

Le premier roulement 15 présente une bague externe 16, une bague interne 17 et des billes telles que 18 disposées entre la bague externe 16 et la bague interne 17, figure 2. La bague externe 16 est apte à être montée sur la deuxième coquille 7. La bague interne 17 est apte à être montée directement sur l'arbre principal 4 ou bien indirectement sur l'arbre principal 4 par l'intermédiaire de l'arbre de rotor (non illustré).

La bague externe 16 présente une première gorge périphérique 19 et la deuxième coquille 7 présente une deuxième gorge périphérique 20. La bague externe 16 et la deuxième coquille 7 sont positionnées l'une par rapport à l'autre de telle manière à ce que la première gorge périphérique 19 et la deuxième gorge périphérique 20 sont positionnées l'une en regard de l'autre pour former un logement 22 dans lequel est inséré un circlips 21.

La bague interne 17 est montée sur l'arbre principal 4 tout en étant en appui axial contre une protubérance 25. Cette protubérance peut être comme illustré une excroissance de l'arbre principal 4 ou bien un anneau rapporté (non illustré) ou bien un autre circlips (non illustré).

En variante figure 3, est illustré un deuxième mode de réalisation avec un premier roulement 30 présentant une bague externe 301, une bague interne 302 et des billes 303 disposées entre la bague externe 301 et la bague interne 302. La bague externe 301 est montée sur la deuxième coquille 7 tandis que la bague interne 302 est montée sur l'arbre principal 4. Une troisième gorge périphérique 200 est formée seulement par la deuxième coquille 7. Cette gorge périphérique 200 est apte à recevoir un circlips 211. Ainsi, la bague externe 161 est positionnée axialement en appui par un premier côté directement contre la deuxième coquille 7 et par un deuxième côté opposé au premier côté indirectement contre la deuxième coquille 7 par l'intermédiaire du circlips 211. Le circlips 211 est alors coincé à l'intérieur de la gorge périphérique 200 entre la bague externe 301 et une butée 71 formée par la deuxième coquille 7.

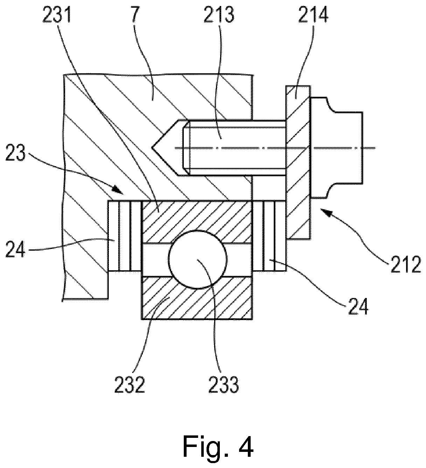

Dans une autre variante figure 4, est illustré un troisième mode de réalisation de l'invention avec un premier roulement 23 présentant une bague externe 231, une bague interne 232 et des billes 233 disposées entre la bague externe 231 et la bague interne 232. Une butée 212 est montée sur la deuxième coquille 7 et est formé par une vis équipée d'une tige 213 et d'une tête de vis 214. La tige 213 est vissée à la coquille 7 de telle manière que la tête de vis 214 est placée en appui contre la bague externe 231.

Des rondelles élastiques telles que 24 peuvent être disposées entre la deuxième coquille 7 et la bague externe 231 par un premier côté et entre la bague externe 231 et la tête de vis 214 par un deuxième côté.

Le deuxième roulement 26 et le troisième roulement 27 peuvent être chacun de configuration identique à l'un des premiers roulements 15, 30 ou 23 tels que précédemment décrits.

Le quatrième roulement 14 est un roulement à rouleaux. Un tel roulement permet de résister à de fortes charges radiales.

Le cinquième roulement 28 et le sixième roulement 29 peuvent être chacun de configuration identique au quatrième roulement.

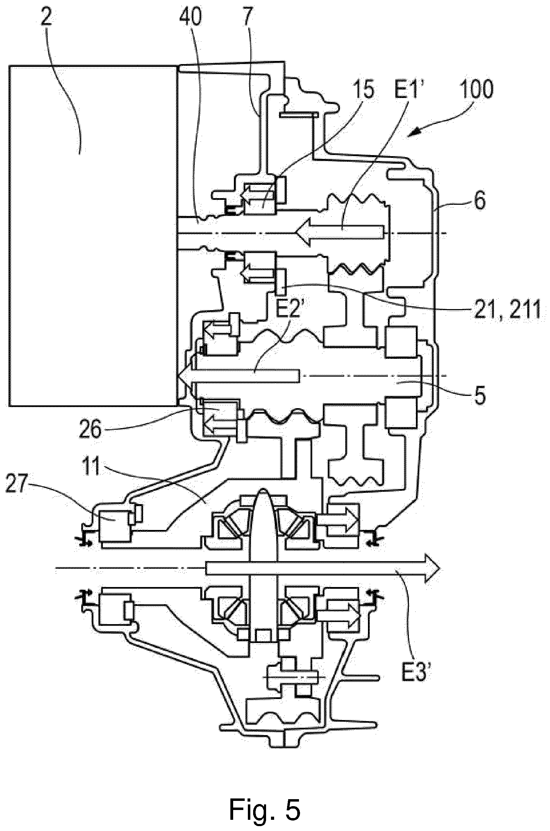

La figure 5 illustre une unité d'entraînement 100 d'un véhicule destiné plus particulièrement, bien que de manière non exclusive, à un engin de déplacement personnel motorisé selon un quatrième mode de réalisation de l'invention. Cette unité d'entraînement 100 se différentie de celle illustrée en figure 1 en ce qu'elle présente un arbre principal 40 qui est supporté uniquement sur la deuxième coquille 7 par un roulement identique au premier roulement 15. Cette unité d'entraînement 100 se différentie également de celle illustrée en figure 1 en ce que les sens des efforts générés par l'arbre principal 4 est inversé.

Dans le premier mode de réalisation figure 1, la première denture 9, la deuxième denture 10, la troisième denture 12 et la quatrième denture 13 présentent chacune une forme hélicoïdale. La première denture 9 et la deuxième denture 10 sont réalisées de telle manière à ce que lorsque l'arbre principal 4, l'arbre intermédiaire 5 et le différentiel 11 sont engrenés les uns avec les autres selon un premier sens de rotation de l'arbre principal 4, un premier effort axial E1 est généré par l'arbre principal 4, un deuxième effort axial E2 est généré par l'arbre intermédiaire 5 et un troisième effort axial E3 est généré par le différentiel 11. Le premier effort axial E1 est dirigé depuis la deuxième coquille 7 vers la première coquille 6. Le deuxième effort axial E2 est dirigé depuis la première coquille 6 vers la deuxième coquille 7. Le troisième effort E3 est dirigé depuis la deuxième coquille 7 vers la première coquille 6. Selon ce premier sens de rotation de l'arbre principal 4, les différentes charges axiales résultants des différents efforts axiaux E1, E2 et E3 sont toutes retransmises directement ou indirectement par l'intermédiaire du circlips 21 à la deuxième coquille 7.

Dans l'exemple de la figure 5, des efforts axiaux E1', E2' et E3' équivalents aux efforts axiaux E1, E2 et E3 sont également représentés. On pourra noter que l'unité d'entraînement 100 est configurée de telle manière à ce que seul l'effort axial E1' est inversé par rapport à l'effort axial E1 tel qu'illustré en figure 1. Le sens de l'effort axial de E2' et de E3' est identique au sens de l'effort axial de E2 et de E3. De la même manière que pour l'exemple en figure 1, les différentes charges axiales résultants des différents efforts axiaux E1', E2' et E3' sont toutes retransmises directement ou indirectement par l'intermédiaire du circlips 21 à la deuxième coquille 7.

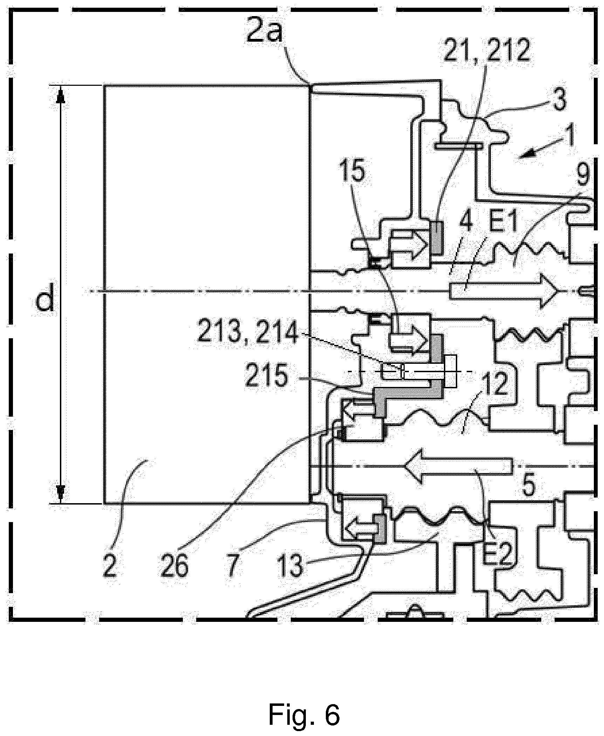

La figure 6 illustre une unité d'entraînement d'un véhicule motorisé selon un cinquième mode de réalisation de l'invention. Cette unité d'entraînement se différentie de celle illustrée en figure 1 en ce qu'elle présente des premiers moyens de retenu axial et des deuxièmes moyens de retenu axial communs et réalisés par une seule et même butée 212.

Dans cet exemple, les premiers moyens de retenu axial et les deuxièmes moyens de retenu axial sont décalés axialement et supportés par une seule et même butée 212. La butée 212 comprend une plaque commune 215 pourvue de deux orifices agencés pour le passage de l'arbre principal 4 et de l'arbre intermédiaire 5.

La butée 212 est montée sur la deuxième coquille 7 et est formé par une vis équipée d'une tige 213 et d'une tête de vis 214. La tige est vissée à la deuxième coquille 7 de telle manière que la tête de vis 214 est placée en appui contre la plaque commune 215.

Dans cet exemple, la machine électrique 2 présente un encombrement sensiblement cylindrique, notamment défini par son diamètre extérieur d, l'axe de rotation de l'arbre intermédiaire 5 est inscrit à l'intérieur du diamètre extérieur d de la machine électrique. Egalement, la machine électrique est en appui axial sur la deuxième coquille 7, par l'intermédiaire d'une surface d'appui 2a sensiblement circulaire ayant un diamètre extérieur d, l'axe de rotation de l'arbre intermédiaire 5 est inscrit à l'intérieur du diamètre extérieur d de la surface d'appui 2a.

## Revendications

1. Unité d'entraînement (1,100) d'un dispositif de mobilité, en particulier d'un véhicule, comprenant
- une machine électrique (2),
- un carter comprenant une première coquille (6) et une deuxième coquille (7), la deuxième coquille étant située entre la machine électrique et la première coquille,
- un arbre principal (4,40) logé dans un espace (8) délimité par la première coquille et la deuxième coquille et étant apte à être mis en rotation par l'intermédiaire de la machine électrique,
- l'arbre principal étant monté sur la deuxième coquille par l'intermédiaire d'un premier roulement (15,30,23),
dans laquelle le premier roulement est monté sans jeu sur la deuxième coquille par l'intermédiaire de premiers moyens de retenu axial (21,211, 212).

2. Unité d'entraînement selon la revendication 1 dans laquelle les premiers moyens de retenu axial sont localisés entre le premier roulement et la deuxième coquille.

3. Unité d'entraînement selon la revendication 1 ou 2, dans laquelle les premiers moyens de retenu axial sont formés par un circlips (21,211) ou une vis (212).

4. Unité d'entraînement selon la revendication 3, dans laquelle le premier roulement comporte une bague externe (16) apte à être montée sur la deuxième coquille et une bague interne (17) apte à être montée sur l'arbre principal, la bague externe comporte une première gorge périphérique (19) et la deuxième coquille comporte une deuxième gorge périphérique (20), la bague externe et la deuxième coquille étant positionnées l'une par rapport à l'autre de telle manière à ce que le circlips (21) est logé à l'intérieur de la première gorge et de la deuxième gorge.

5. Unité d'entraînement selon la revendication 3, dans laquelle le premier roulement comporte une bague externe (301) apte à être montée sur la deuxième coquille et une bague interne (302) apte à être montée sur l'arbre principal, la deuxième coquille comportant une butée (71), le circlips (211) étant positionné en appui contre la butée et contre la bague externe.

6. Unité d'entraînement selon la revendication 3, dans laquelle le premier roulement comporte une bague externe (231) apte à être montée sur la deuxième coquille et une bague interne (232) apte à être montée sur l'arbre principal, la vis étant formée par une tige (213) et par une tête de vis (214), la tige étant vissée dans la deuxième coquille de telle sorte à ce que la bague externe soit en appui contre la tête de vis.

7. Unité d'entraînement selon la revendication 6, dans laquelle au moins une rondelle élastique (24) est montée entre la deuxième coquille et la bague externe et/ou entre la bague externe et la tête de vis.

8. Unité d'entraînement selon l'une des revendications 1 à 7, dans laquelle elle comporte un deuxième roulement (14) monté sur la première coquille et disposé entre l'arbre principal et la première coquille.

9. Unité d'entraînement selon la revendication 8, dans laquelle le deuxième roulement est à un roulement à rouleaux.

10. Unité d'entraînement selon la revendication 9, dans laquelle le deuxième roulement (14) est monté avec jeu sur la première coquille.

11. Unité d'entraînement selon l'une des revendications 1 à 10, dans laquelle elle comporte un arbre intermédiaire (5) qui coopère par engrènement avec l'arbre principal, l'arbre intermédiaire étant monté sur la deuxième coquille par l'intermédiaire d'un troisième roulement (26), le troisième roulement est monté sans jeu sur la deuxième coquille par l'intermédiaire de deuxièmes moyens de retenu axial (21,211,212).

12. Unité d'entraînement selon la revendication 11, dans laquelle l'arbre intermédiaire est monté sur la première coquille par l'intermédiaire d'un cinquième roulement (28), le cinquième roulement étant un roulement à rouleaux.

13. Unité d'entraînement selon la revendication 11 ou la revendication 12, dans laquelle l'arbre intermédiaire est positionné sur un même encombrement radial que celui de la machine électrique.

14. Unité d'entraînement selon la revendication 12 ou 13, dans laquelle elle comporte un différentiel (11) qui coopère par engrènement avec l'arbre intermédiaire, le différentiel étant monté sur la deuxième coquille par l'intermédiaire d'un quatrième roulement (27), le quatrième roulement étant monté sans jeu sur la deuxième coquille par l'intermédiaire de troisièmes moyens de retenu axial (21,211,212).
